# EUROPEAN PATENT APPLICATION

(11) **EP 0 653 572 A1**
(43) Date of publication of application: **17.05.1995**
(21) Application number: 94830366.4
(22) Date of filing: 18.07.1994
(51) Int. Cl.: F16B 47/00

(54) **Highly adhesive sucker**

(30) Priority: 12.11.1993 IT AN930022 U
(71) Applicant: Ridolfi, Vieri, I-06083 Bastia Umbra (PG) (IT)
(72) Inventor: Ridolfi, Vieri, I-06083 Bastia Umbra (PG) (IT)
(74) Representative: Baldi, Claudio

(57) **Abstract**

The instant invention concerns a highly adhesive sucker with a central area (2) of considerable thickness to which there are provided concentrically - from the inside towards the outside - a groove (4), a hollow rib (5), a second groove (6) which is not as wide and not as deep as the first groove (4), as well as a second rib (7) positioned at the perimetral edge, which is not as wide or high as the innermost rib (5): it being provided that on the lower face of the sucker there exists a groove (5a), directly underneath the rib (5), which delimits a flat annular band from the inside.

## Description

The instant invention concerns a highly adhesive sucker to be used preferably for baggage racks on motor vehicles.

The invention was conceived in order to solve a problem which emerged in the use of a particular sucker type of baggage rack for motor vehicles, even if it is structured in such a way as to also be practical and suitable in a different context and for other uses.

More particularly, there have been in existence for some time now, sucker type appliances, to be fitted to the roof or the bonnet of motor vehicles, on which suitcases, parcels, skis, surfboards and other items can be secured.

Normally, said appliances have a box shaped body with a circular base and are of negligible height, with eyelets to which to secure the rope or belts which hold in place the objects to be transported; below said box shaped body there is provided a traditional sucker, with a circular shape, which is activated by means of a lever fitted to the side of the box shaped body in order to secure the entire appliance in a stable manner to the bodywork of the vehicle.

It is possible to determine the grip of the sucker on the roof or the bonnet of the vehicle or alternatively, its detachment thereof, by means of this small lever.

Obviously, in order to obtain optimal stability of the objects to be transported on the outside of a vehicle, it is usually necessary to use two, four or more of these appliances.

Said appliances have proved to be quite practical and functional; in fact they are also quite cheap, easy and rapid to fit, and moreover they do not jeopardise in any substantial manner the aerodynamics of the vehicle in motion.

However, the use of said appliances has been limited by the fact that a considerable practical problem has emerged: in fact, it so happens that the suckers with which said baggage racks have been fitted to date, are not able to adhere to the surface below in an entirely secure manner.

In other words, it has been observed that said suckers have a tendency to detach themselves, especially if they are not in a perfect state of maintenance, when the load is particularly heavy and when the vehicle is travelling at a certain speed.

It is evident how a problem of this nature, with all the related risks, can substantially limit the commercial distribution of the baggage racks in question, not only because of the natural perpelxity of consumers, but also because in certain countries, the Authorities responsible for evaluating the safety standards of all such products on the market, have prohibited the sale of such articles.

It is due to these considerations that the idea of designing a new type of sucker was conceived, with the advantage of being more highly adhesive and much less likely to detach itself even under stress, compared to the traditional versions.

The advantages of the new sucker in question will become obvious after having briefly illustrated the structure and use of one of the traditional suckers, used up to the present time in baggage racks. The traditional sucker, made of rubber and with a circular shape, has a perfectly smooth bottom which adheres to the fixing surface.

Moreover, it is of varying thicknesses: being thicker at the central circular area and gradually thinner towards the edge; this means that a traditional sucker at the perimetral edge is of minimum thickness. At the central circular area of maximum thickness there are two metallic clips on which the arm of the aforementioned lever acts in order to determine the adhesion or the detachment of the sucker from the fixing surface.

More particularly, in order to obtain the adhesion of said sucker, the arm of the lever must be moved upwards, consequently determining the raising of the two clips on the sucker and therefore of the whole central area which is the thickest part.

Obviously, this operation has the effect of creating a depression underneath the sucker, this depression causing the sucker to adhere to the fixing surface; however, this also means that the sucker assumes what could be defined as a "bell shape", with only the perimetral edge in contact with the fixing surface.

It is clear that in such a position, the entire task of guaranteeing the adhesion of the sucker falls entirely and exclusively to the perimetral edge, which as already mentioned, is of minimum thickness and therefore also subject to warping.

In principle, it can be stated that the greater the force with which the central area of the sucker is lifted, the thinner is the perimetral surface which stays in contact with the fixing surface.

It is therefore obvious that the very thinness of the part of the sucker in contact with the fixing surface makes the adhesive action rather precarious.

It has, in fact, been demonstrated that the adhesive action of traditional suckers, on the abovementioned type of baggage racks, can be jeopardised even in cases, when the loads applied are not excessive.

The new sucker, according to the invention was designed with extreme care in order to guarantee the capacity of adhesion to the fixing surface in a totally secure manner; the desired result being obtained by supplying the sucker with a special and totally new structural shape.

In actual fact, the new sucker in question has the usual circular central area which is the thickest part, above which are positioned the usual pair of metallic clips; however, outside this central area on the upper surface of the sucker, there are provided two concentrical ribs of which the outermost is positioned directly at the circular edge of the sucker.

Naturally, on the upper surface of the new sucker, there are also two grooves, of which the innermost groove is in an intermediate position between the central circular area of the sucker and the innermost rib, while the outermost groove is in an intermediate position between the two ribs.

The innermost rib is of the same height as the thickness of the central circular area, while the perimetral rib is of considerably lower height; moreover, it should be pointed out that the innermost rib is, in reality, a hollow rib in the sense that on the lower face of the sucker there is a groove directly beneath it.

It is precisely this groove which permits the isolation of an annular area of considerable height on the lower surface of the sucker, to the rear of the perimetral edge, which constitutes the adhesive surface of the new sucker in question.

In fact, in order to clarify the functionality of this new article, it should be underlined that should the central part be lifted - by means of the usual lever which acts on the clips - to create the necessary depression, only this central area assumes the characteristic bell-shaped position from its centre to the circular groove on the lower face.

Actually, it is the presence of said groove which stops the upward pulling force from infringing upon the peripherical anular area of the new sucker; an area which consequently remains perfectly flat and in total adherence to the fixing surface.

It can even be said that it is actually the special shape of the aforementioned hollow rib which guarantees that a greater pulling force on the central area of the sucker is transformed into a more energetic pushing of the anular adehsion area against the fixing surface.

Just as important in this respect is the presence of the second upper rib, on the perimetral edge of the sucker, which has the effect of increasing the intrinsic resistance to warping of this very edge.

In conclusion it can be declared that the new sucker is better able to resist detachment than the traditional type of sucker, in that it adheres to the fixing surface with a peripherical anular band of considerable width and substance, able moreover, to constantly maintain a position perfectly adherent to the fixing surface underneath; while in traditional suckers, the adhesive action is ensured only by the thin perimetral edge which is subject to warping and which, as the pulling load increases, tends to progressively reduce its adhesive surface.

For further clarity of explanation, the description of the invention continues with reference to the attached drawings, reproduced for illustrative and not limitative purposes, wherein:

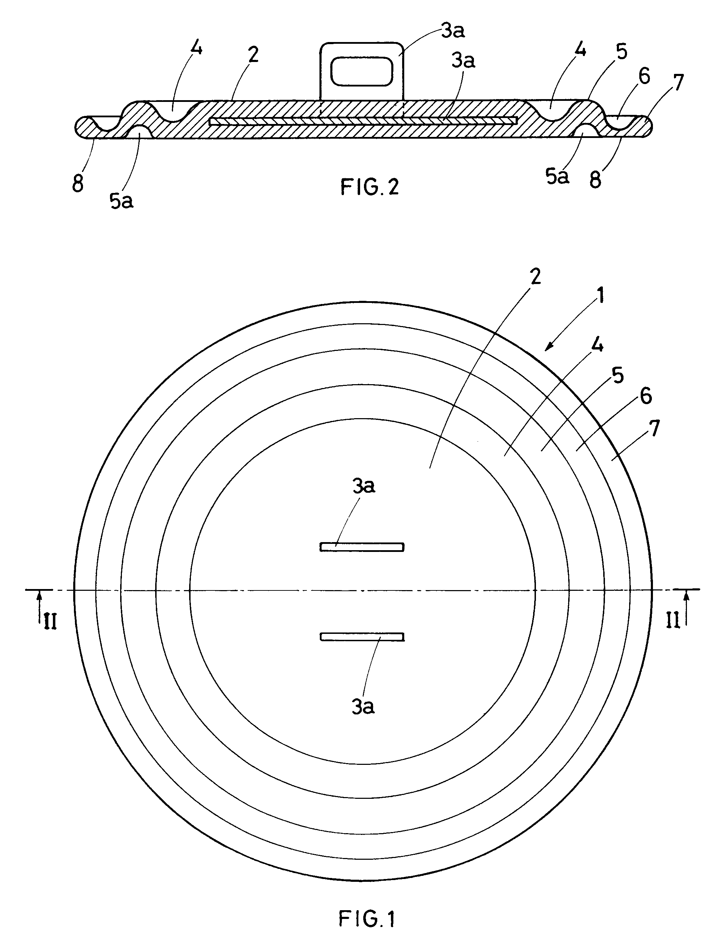

- Figure 1 is the plan view from the top of the new sucker according to the invention;
- Figure 2 is a section of Figure 1, along the II-II plane.

With reference to the attached figures, the article in question consists of a sucker (1), with a circular shape in which it is possible to identify a central circular area (2) on which there is a metallic disc (3), from which there protrude on the outside of the sucker (1) two metallic clips (3a).

In a position which is concentric to the central circular area (2), there are provided, from the inside towards the outside, a groove (4), a hollow rib (5) of about the same width as the said groove (4) and of the same height as the thickness of the central area (2), a second groove (6) which is not as wide or as deep as the first groove (4), as well as a second rib (7), which constitutes in practice an actual thickening of the perimetral edge of the article, less wide and not as high as the innermost hollow rib (5).

On this basis, it is therefore possible to verify the presence on the lower face of the new sucker (1) of an annular groove (5a) - in a position directly underneath the innermost rib (5) on the upper face - on the oustide of which there is a flat annular area (8) which extends for a considerable width up to the perimetral edge of the article (1) and which, as already indicated, constitutes the actual real adhesive surface of the entire sucker.

It is again underlined that even if the new sucker just decsribed was produced expressly to be fitted to baggage racks for motor vehicles, there is no reason why it sould not be employed for all other uses in which a highly adhesive sucker is required.

## Claims

**1)** Highly adhesive sucker, of the type with a central metallic disc (3), fitted with gripping clips (3a) protruding from the central area (2) of the article, characterised by the fact that concentrically to this said circular central zone (2), it has, from the inside towards the outside, a groove (4), a hollow rib (5) of about the same width as the above groove (4) and of the same height as the thickness of the central area (2), a second groove (6) which is less wide and not as deep as the first groove (4), as well as a second rib (7), at the perimetral edge, which is not as wide or as deep as the innermost hollow rib (5); it being provided that on the lower face of the sucker (1), there is a groove (5a), directly underneath the rib (5), which delimits a flat annular band (8) from the inside.
